# EUROPEAN PATENT APPLICATION

(11) **EP 4 825 666 A1**
(43) Date of publication of application: **21.10.2026**
(21) Application number: 26172091.6
(22) Date of filing: 14.04.2026
(51) Int. Cl.: B60R 16/03, B60H 1/00, B60N 2/00, B60R 16/023, G06F 1/3287

(54) **CONTROL SYSTEM FOR AUXILIARY SYSTEMS**

(30) Priority: 16.04.2025 GB 202505726
(71) Applicant: Jaguar Land Rover Limited, Coventry, Warwickshire CV3 4LF (GB)
(72) Inventor: Pramanik, Ranjan, Coventry, CV3 4LF (GB); Rai, Vishal, Coventry, CV3 4LF (GB); Mustafa, Gaafar, Coventry, CV3 4LF (GB); Llewelyn-Overs, Sheldon, Coventry, CV3 4LF (GB); Dutta, Nilabza, Coventry, CV3 4LF (GB); Shah, Mishal, Coventry, CV3 4LF (GB)
(74) Representative: Jaguar Land Rover Patents Department

(57) **Abstract**

Aspects of the present invention relate to a control system (300) for controlling a plurality of auxiliary electrical systems (350-1 - 350-n) controllable to operate in a plurality of power modes comprising a default power mode and a power saving mode. The control system is configured to: receive (210) a use context signal (202) indicative of a current context of the vehicle; determine (220) a predicted level of use of the plurality of auxiliary electrical systems of the vehicle according to the current context of the vehicle; in dependence on the predicted level of use, determine (230) at least one of the plurality of auxiliary electrical systems to operate in the power saving mode; and output (240) a power saving control signal (204) to the at least one of the plurality of auxiliary electrical systems to cause the at least one auxiliary electrical system to operate in the power saving mode.

## Description

### TECHNICAL FIELD

The present disclosure relates to a context aware control system for auxiliary systems of a vehicle. Aspects of the invention relate to a control system for controlling a plurality of auxiliary electrical systems of the vehicle, a system, a vehicle, and a method for controlling the plurality of auxiliary electrical systems of the vehicle.

### BACKGROUND

It is known to provide various features and auxiliary functionalities in a vehicle, to provide a comfortable experience and journey for drivers and passengers. Such features include temperature controls, lighting, visual and audio outputs, and other in-vehicle features. Such features are powered from an electrical store of the vehicle. Powering more features uses more electrical energy. Using electrical energy to provide such features means that the less electrical energy can be available to use essential features and/or particularly, in case of an electrical or a hybrid vehicle, less electrical energy available to propel the vehicle.

It is an aim of the present invention to address one or more of the disadvantages associated with the prior art.

### SUMMARY OF THE INVENTION

Aspects and embodiments of the invention provide a control system for controlling a plurality of auxiliary electrical systems of the vehicle, a system, a vehicle, and a method for controlling the plurality of auxiliary electrical systems of the vehicle, as claimed in the appended claims.

According to an aspect of the present invention there is provided a control system for controlling a plurality of auxiliary electrical systems of a vehicle, the control system comprising one or more processors collectively configured to: receive a use context signal indicative of a current context of the vehicle; determine at least one auxiliary electrical system of the plurality of auxiliary electrical systems to operate in a power saving mode in dependence on the current context of the vehicle; and output a power saving control signal to the at least one auxiliary electrical system to cause the at least one auxiliary electrical system to operate in the power saving mode.

Advantageously, power use may be reduced by operating one or more auxiliary electrical systems in a power saving mode depending on the context of use of the vehicle. In this way, one or more auxiliary electrical systems may be operated in a power saving mode compared with power consumption of the auxiliary electrical systems operating in a default mode. Since the operation of one or more auxiliary electrical systems is performed depending on the context of the use of the vehicle, intelligent control can be performed whereby the user does not perceive a noticeable drop in functionality offered by the auxiliary electrical systems. For example, in the context of a solo driver with no passengers, switching rear seating auxiliary electrical systems off reduces power consumption of the auxiliary electrical systems of the vehicle overall.

The control system comprises one or more controllers collectively comprising at least one electronic processor having an electrical input for receiving an input signal; and at least one memory device electrically coupled to the at least one electronic processor and having instructions stored therein; and wherein the at least one electronic processor is configured to access the at least one memory device and execute the instructions thereon so as to: receive a use context signal indicative of a current context of the vehicle; determine at least one auxiliary electrical system of the plurality of auxiliary electrical systems to operate in a power saving mode in dependence on the current context of the vehicle; and output a power saving control signal to the at least one auxiliary electrical system to cause the at least one auxiliary electrical system to operate in the power saving mode.

Advantageously, power use may be reduced by operating one or more auxiliary electrical systems in a power saving mode depending on the context of use of the vehicle.

According to an aspect of the present invention there is provided a control system for controlling a plurality of auxiliary electrical systems of a vehicle, wherein the plurality of auxiliary electrical systems are controllable to operate in a plurality of power modes comprising a default power mode and a power saving mode using less power than the default power mode, the control system comprising one or more processors collectively configured to: receive a use context signal indicative of a current context of the vehicle; determine a predicted level of use of the plurality of auxiliary electrical systems of the vehicle according to the current context of the vehicle; in dependence on the predicted level of use, determine at least one of the plurality of auxiliary electrical systems to operate in the power saving mode; and output a power saving control signal to the at least one of the plurality of auxiliary electrical systems to cause the at least one auxiliary electrical system to operate in the power saving mode.

Advantageously, the auxiliary electrical systems of the vehicle can be controlled according to the context of the vehicle's use and electrical power can be conserved by the vehicle by operating one or more auxiliary electrical systems in a power saving mode in a context appropriate way. For example, if the context of the vehicle is that it is to be driven with only the driver as an occupant during the day, auxiliary electrical systems configured to provide functionality in the rear passenger seats may be operated in a power saving mode since the context is that there are no rear seat passengers. Further, internal and external lighting of the vehicle may be operated in a power saving mode because the vehicle is in daylight. As such, users of the vehicle may perceive that full or sufficient functionality is being provided by the auxiliary electrical systems, though at least one the auxiliary electrical systems is operated in power saving mode in a contextually intelligent way.

The control system comprises one or more controllers collectively comprising at least one electronic processor having an electrical input for receiving an input signal; and at least one memory device electrically coupled to the at least one electronic processor and having instructions stored therein; and wherein the at least one electronic processor is configured to access the at least one memory device and execute the instructions thereon so as to: receive a use context signal indicative of a current context of the vehicle; determine a predicted level of use of the plurality of auxiliary electrical systems of the vehicle according to the current context of the vehicle; in dependence on the predicted level of use, determine at least one of the plurality of auxiliary electrical systems to operate in the power saving mode; and output a power saving control signal to the at least one of the plurality of auxiliary electrical systems to cause the at least one auxiliary electrical system to operate in the power saving mode.

Advantageously, the auxiliary electrical systems of the vehicle can be controlled according to the context of the vehicle's use and electrical power can be conserved by the vehicle by operating one or more auxiliary electrical systems in a power saving mode in a context appropriate way.

The control system may be configured to: in dependence on the predicted level of use, determine a further auxiliary electrical system of the plurality of auxiliary electrical systems to operate in the default power mode; and output a default power control signal to the further auxiliary electrical system to cause the further auxiliary electrical system to operate in the default power mode.

Advantageously, the further auxiliary electrical systems may be operated in the default power mode alongside at least one auxiliary electrical system operating in the power saving mode, depending on the context of the vehicle.

The at least one auxiliary electrical system operating in the power saving mode may use less than 50% of the power used by the at least one auxiliary electrical system operating in the default power mode. The at least one auxiliary electrical system operating in the power saving mode may, as part of the plurality of auxiliary electrical systems, cause the plurality of auxiliary electrical systems to use less than 50% of the power used by the plurality of auxiliary electrical system all operating in the default power mode. The power usage of the plurality of auxiliary electrical systems with plural auxiliary electrical systems running in the power saving mode may be below 50% of the plurality of the auxiliary electrical systems running in the default power mode.

Advantageously, the power used by the at least one auxiliary electrical systems, operating the power saving mode, may be at most half the power used by the at least one auxiliary electrical system when operating in the default power mode. Advantageously, the power used overall by all auxiliary electrical systems by way of the at least one auxiliary electrical system operating in the power saving mode, may be at most half the power used by all the auxiliary electrical systems when all operating in the default power mode. Advantageously, the overall power usage of all the plurality of auxiliary electrical systems may be at most half of the power used when all of the plurality of operating in the default power mode because plural auxiliary electrical systems are operating in the power saving mode.

The current context may be indicative of one or more of: a planned journey of the vehicle; a time of use of the vehicle; a determined identity of the current user of the vehicle; a determined occupancy of the vehicle; and a remaining state of charge of an energy store of the vehicle.

Advantageously, the context of the vehicle may be determined in different ways, to identify a predicted level of use of the auxiliary electrical systems in that context and reduce the power requirements of the plurality of auxiliary electrical systems by intelligently operating at least one of the plurality of auxiliary electrical systems in a power saving mode.

The current context may be indicative of a planned journey of the vehicle; and the determination of the predicted level of use is performed according to the planned journey, to determine the at least one of the plurality of auxiliary electrical systems to be operated in the power saving mode in order that the plurality of auxiliary electrical systems do not use energy exceeding a predetermined energy threshold of the planned journey.

Advantageously, in the context of a planned journey, the predicted power requirements of the plurality of auxiliary electrical systems can be determined according to the planned journey and one or more of the plurality of auxiliary electrical systems can be operated in the power saving mode.

The predicted energy usage may be dependent on one or more of: a distance of the planned journey; an elevation of the planned journey; and a terrain of the planned journey. Advantageously, different factors determined from the planned route which affect the driving range of the vehicle may be taken into account in determining which auxiliary electrical systems to operate in a power saving mode.

The use context signal may comprise an input indicative of a vehicle to be driven along a planned route generated by a route planning system. Advantageously, a user may enter a route to a route planning system of the vehicle, and the route may be used as input for the control system for use in determining one or more auxiliary electrical systems to operate in a power saving mode, for example in order to conserve energy stored in the vehicle.

The current context may be indicative of a planned journey of the vehicle according to a route planned using a route planning system of the vehicle, and the determination of the predicted level of use may be performed according to the planned journey, to: determine the at least one of the plurality of auxiliary electrical systems to be operated in a first power saving mode according to predicted energy usage to perform the planned journey being above a first energy usage threshold; and determine the at least one of the plurality of auxiliary electrical systems to be operated in a second power saving mode in which less power is consumed than in the first power saving mode, according to predicted energy usage to perform the planned journey being above a second energy usage threshold greater than the first energy usage threshold.

Advantageously, a granular approach may be taken to determining, according to the context in which the vehicle is being used, which of the auxiliary electrical systems to operate in one of plural possible power saving modes. This granular approach may be taken according to predicted energy usage estimated for a planned journey, and/or may also be taken according to one or more other contextual factors. For example, a set of auxiliary electrical systems may be operated in a first power saving mode according to the location of occupants in the vehicle, and may be operated in a second power saving mode, or not, further according to the identity of the driver.

The current context may be indicative of a current time of use of the vehicle; and the determination of the predicted level of use may comprise: identifying, using a usage log stored in a storage means, that the vehicle was historically used at a historical time corresponding to the current time of use of the vehicle; and identifying, using the usage log, at least one of the plurality of auxiliary electrical systems historically operated in a power saving mode at the corresponding historical time of use of the vehicle.

Advantageously, the historical use of the plurality of auxiliary electrical systems may be taken into account in a future usage of the vehicle in a context matching that of the context of the vehicle according to a historical record of use. For example, if a particular driver regularly drives the vehicle at 8 AM on a Monday and has previously disabled visual and audio output systems directed to the rear passenger seats, this historical use may be accounted for, and in a current context of the same particular driver driving the vehicle at 8 AM on a Monday, auxiliary electrical systems directed to the rear passenger seats may be automatically operated in a power saving mode.

The current context may be indicative of a time of use of the vehicle. Accordingly, the use context signal may comprise an input indicative of a vehicle to be driven at an indicated time, e.g. unlock signal or an engine start-up signal at scheduled time, a scheduled journey signal. Advantageously, the indication that the vehicle is about to be driven may be provided in different ways.

The power saving control signal output to the at least one auxiliary electrical system to cause the at least one auxiliary electrical system to operate in the power saving mode may be determined according to operation parameters retrieved from the usage log, the operation parameters indicative of the historical operation of the at least one of the plurality of auxiliary electrical systems operating in the power saving mode at the matching historical time of use of the vehicle. Advantageously, the control system may not only determine that an auxiliary electrical system is to be operated in a power saving mode, but may retrieve the prior determined operation parameters stored in the usage log and provide these to the auxiliary electrical system, for example rather than a determination being made of what the operation parameters should be.

The current context may be indicative of a determined identity of a current user of the vehicle; and the determination of the predicted level of use may comprise: identifying, using a usage log stored in a storage means, that the vehicle was historically used by the current user of the vehicle; and identifying, using the usage log, at least one of the plurality of auxiliary electrical systems historically operated in a power saving mode by the current user.

Advantageously, the operation of one or more auxiliary electrical systems in a power saving mode may be performed according to the personal preference of a particular user. For example, the control system may determine to operate internal lights in the rear of the vehicle in a power saving mode in the context of the vehicle being in daylight. However, if a particular user prefers to operate the internal lights in the rear of the vehicle in the default power mode, even though the vehicle is in daylight, this preference can be stored in the usage log and that users preference for the operation of the internal lights can be performed on recognition that that particular user is to use the vehicle.

The use context signal may comprise an input indicative of the identity of the user, e.g. an unlock signal from a personal device associated with the user, entry of a personal credential indicative of the user identity, or biometric detection and recognition of a user of the vehicle (such as a facial scan, fingerprint, or passcode entry). Advantageously, the identity of the user may be detected in different ways.

The power saving control signal output to the at least one auxiliary electrical system to cause the at least one auxiliary electrical system to operate in the power saving mode may be determined according to operation parameters retrieved from the usage log stored in the storage means, the operation parameters indicative of the historical operation of the at least one of the plurality of auxiliary electrical systems by the current user. Advantageously, the control system may not only determine that an auxiliary electrical system is to be operated in a power saving mode, but may retrieve the prior determined operation parameters stored in the usage log and provide these to the auxiliary electrical system, for example rather than a determination being made of what the operation parameters should be.

The current context may be indicative of a determined occupancy of the vehicle; and the determination of the predicted level of use comprises identifying that the at least one auxiliary electrical system is configured to provide functionality at a location in the vehicle at the location of the one or more occupants. Advantageously, the determination of which of the auxiliary electrical systems to operate in a power saving mode may be made in dependence on the occupancy of the vehicle. For example, if it is determined that there are no occupants in the rear passenger seats, then infotainment systems, or audio output devices, configured to provide output to those rear passenger seats may be operated in a power saving mode.

The determination of the predicted level of use may comprise identifying that the at least one further auxiliary electrical system is configured not to provide functionality at a location in the cabin other than at the location of the one or more occupants. Advantageously, if it is determined that there is no occupant/s in a particular location, then auxiliary electrical system is configured to provide functionality at that location may be operated in a power saving mode.

The use context signal may comprise an input indicative of one or more occupants located in the cabin of the vehicle. The occupancy signal may be generated in dependence on one or more of: a seatbelt connection signal indicative of a seatbelt being fastened in a location in the cabin; a pressure sensor signal indicative of an occupant weight applied to a seat location in the cabin; and an image capture signal indicative of image capture of an occupant at a location in the cabin. Advantageously, the determination of the presence of an occupant may be made in different ways, including by way of apparatus already present in the vehicle.

The control system may be configured to: retrieve, from a storage means, a historical use status of the plurality of auxiliary electrical systems over a prior predetermined time period, and a corresponding historical location of one or more occupants in the cabin over the prior predetermined time period; and determine the predicted level of use in dependence on the determined location of the one or more occupants in the cabin matching the historical location of one or more occupants in the cabin over the prior predetermined time period, and the corresponding historical use status of the plurality of auxiliary electrical systems.

Advantageously, the context of the vehicle may be historical use according to the determined occupancy of the vehicle, and that may be accounted for in determining which of the auxiliary electrical systems to operate in the power saving mode on determining that the same occupancy is as in the historical records.

When operating in a power saving mode, the at least one auxiliary electrical system may be turned off. Advantageously, the auxiliary electrical system determined to be operated in a power saving mode may be turned off so that it draws substantially zero power. For example, the system may be switched off, or operational in a snooze mode in which no functionality can be provided, unless an input is made to cause the system to be turned on.

When operating in a power saving mode, the at least one auxiliary electrical system may be turned on and configured to provide a reduced range of functionality compared to operation in a default power mode. e.g. infotainment can provide audio output only and no visual output, or seat warmer only provides warming in part of the seat. Advantageously, the auxiliary electrical system may be operated in a power saving mode by reducing the number of functions that it can provide, for example to allow it to operate in a basic or limited way to both reduce the power drawn by the auxiliary electrical system allowance to provide limited functionality.

When operating in a power saving mode, the at least one auxiliary electrical system may be turned on and configured to provide a default level of functionality at a reduced output power compared to operation in a default power mode [e.g. infotainment screen dimmer, seat warmer heats to a lower temperature]. Advantageously, the auxiliary electrical system may be operated in a power saving mode by maintaining number of functions that it can provide compared with operation in a default power mode, but reducing the power requirements for it to provide those functions. For example the amplitude of output provided by the auxiliary electrical system may be reduced compared to operation in the default power mode (e.g. a dimmer screen brightness, or a quieter audio output).

The plurality of auxiliary electrical systems may not be directly powered by a traction battery of the vehicle. For example, the plurality of auxiliary electrical systems may be configured to operate at a low voltage, e.g. at 12V. Advantageously, the "low-power" functions provided by the vehicle can be controlled to operate in a power saving mode.

The plurality of auxiliary electrical systems may comprise: an infotainment input / output device, an interior light, an exterior light, a speaker, a heater, an air conditioner, a seat warmer, a seat ventilator. Advantageously, various different auxiliary electrical systems may be controlled by the control system to allow for flexibility in serving the predicted level of use desired by a user whilst also conserving electrical power.

The predicted level of use of the plurality of auxiliary electrical systems of the vehicle may be one of a plurality of predetermined predicted levels of use. For example there may be six levels of predicted use (0 to 5) of each of the plurality of auxiliary electrical systems wherein each level corresponds to a range of electrical power consumption of an auxiliary electrical system operating at that predicted level of use. Advantageously, determination of how to operate one or more of the auxiliary electrical systems in a power saving mode may be made in accordance with a predicted level of use of the auxiliary electrical systems. As an example, in the context of a fully occupied vehicle, the predicted level of use of the infotainment systems in the vehicle may be at the highest level, e.g. level 5 of 5, whereas in the context of only one driver occupant, the level of use of the infotainment systems may be at the lowest level able to provide functionality to the driver only, e.g. level 1 of 5.

The control system may be further configured to output an indicator signal to an output device and cause the output device to provide an indication, to an occupant of the vehicle, of the operation of the at least one auxiliary electrical system in the power saving mode. Advantageously, the user is informed of the operation of the auxiliary electrical systems in a power saving mode to help avoid concern or confusion as to why those systems are not operating in the default power mode, and to increase user confidence in the operation of the auxiliary electrical systems in a contextually relevant way.

The control system may be further configured to receive a user override input signal to cause the at least one auxiliary electrical system operating in the power saving mode to operate in the default power mode. Advantageously, a user can take manual control of the operation of the auxiliary electrical systems and choose to override operation of one or more of them in a power saving mode if they wish.

The control system may be further configured to: determine an estimated difference in driving range for the vehicle between operating the at least one auxiliary electrical system in the default power mode, and operating the at least one auxiliary electrical system in the power saving mode, and output a range difference indicator signal to an output device and cause the output device to output an indication of the difference in driving range to an occupant of the vehicle due to the at least one auxiliary electrical system operating in the default power mode compared with operating in the power saving mode. Advantageously, the power which is saved by operating the auxiliary electrical systems in the power saving mode as opposed to the default power mode may contribute towards the driving range of the vehicle, and this contribution may be indicated to the user.

The plurality of auxiliary electrical systems may comprise a plurality of different auxiliary electrical systems configured to provide functionality at the same location in the cabin, e.g. a seat warmer, a seat cooler, a HVAC air vent, lighting (e.g. cabin interior lights), an infotainment system.

The plurality of auxiliary electrical systems may comprise a plurality of the same auxiliary electrical system at plural different locations in the cabin, e.g. plural infotainment screens for viewing from different seats in the cabin.

According to an aspect of the present invention there is provided a system comprising: any control system disclosed herein; and the plurality of auxiliary electrical systems. Advantageously, a control system and plurality of auxiliary electrical systems may be provided and installed in a vehicle.

According to an aspect of the present invention there is provided a vehicle comprising any system disclosed herein or any control system disclosed herein. Advantageously, a vehicle may comprise plural auxiliary electrical systems which can be controlled according to a control system to conserve electrical energy and operate one or more of the auxiliary electrical systems in a power saving mode.

According to an aspect of the present invention there is provided a method for controlling a plurality of auxiliary electrical systems of a vehicle, wherein the plurality of auxiliary electrical systems are controllable to operate in a plurality of power modes comprising a default power mode and a power saving mode using less power than the default power mode, the method comprising: receiving a use context signal indicative of a current context of the vehicle; determining an predicted level of use of the plurality of auxiliary electrical systems of the vehicle according to the current context of the vehicle; in dependence on the predicted level of use, determining at least one of the plurality of auxiliary electrical systems to operate in the power saving mode; and outputting a power saving control signal to the at least one of the plurality of auxiliary electrical systems to cause the at least one auxiliary electrical system to operate in the power saving mode.

According to an aspect of the present invention there are provided computer readable instructions which, when executed by one or more processors, cause the one or more processors to perform any method disclosed herein.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a vehicle in accordance with examples of the invention;
Figure 2 shows a method for controlling a plurality of auxiliary electrical systems of a vehicle in accordance with examples of the invention;
Figure 3 shows a control system for controlling a plurality of auxiliary electrical systems of a vehicle in accordance with examples of the invention;
Figure 4 shows a control system for controlling a plurality of auxiliary electrical systems of a vehicle in accordance with examples of the invention;
Figures 5A-5D illustrate examples of power consumption of auxiliary electrical systems operating in the default mode and with at least one of auxiliary electrical system operating in a power saving mode in different contexts, in accordance with examples of the invention;
Figure 6 shows an example relationship between power consumed by auxiliary electrical systems of the vehicle and a remaining state of charge of an energy source of the vehicle in accordance with examples of the invention; and
Figure 7 shows a system comprising a control system and a plurality of auxiliary electrical systems in accordance with examples of the invention.

### DETAILED DESCRIPTION

It is known to provide various features and auxiliary functionalities in a vehicle, to provide a comfortable experience and journey for drivers and passengers. Such features include temperature controls, lighting, visual and audio outputs, and other in-vehicle features.

Such auxiliary features are powered from an electrical store of the vehicle. Powering more auxiliary features uses more electrical energy. Using electrical energy to power the auxiliary features means that that the less electrical energy can be available to use essential features and/or particularly, in case of an electrical or a hybrid vehicle, less electrical energy available to propel the vehicle. In a passenger electric vehicle, the auxiliary features typically run on a low voltage system (e.g. a 12V supply). Typically, the auxiliary features operate assuming full occupancy of the vehicle. While these auxiliary features contribute to comfort and convenience of those occupying and driving the vehicle, they also consume electrical energy, even if not actively used. Therefore, electrical energy is lost by fully operating the auxiliary features, even if they do not necessarily contribute to the experience of the driver and any passengers during use of the vehicle.

Examples disclosed herein provide contextually appropriate functionality from the auxiliary features with the aim of improving energy usage of an energy store of the vehicle while retaining the vehicle occupants' perceived provision of functionality by those auxiliary features. For example, if the context of the vehicle is that it is being used in daylight, a functionality provided by the lights as auxiliary systems may be paused or reduced, since the occupants may be happy not to have the in-vehicle lights operational during use of the vehicle in daylight, and a power saving is made by not operating the lights (or at least operating them in a reduced power mode). It will be appreciated that there are a range of contexts and ways of managing the operation of auxiliary systems within the vehicle which provide the benefit of saving power which are covered by examples disclosed herein.

Examples of auxiliary systems which may be operated at in a reduced power mode include:
- infotainment systems, which may comprise large touch screens, music systems and processors. By dimming the display screen, lowering audio volume, and/or switching off unused features such as navigation when not in use, power drawn by the infotainment system may be reduced.
- ambient lighting, including "mood lighting", may be available and use power. Providing adjustable brightness levels or the ability to turn off specific lighting zones allows for a personalised experience while reducing power consumption compared with having all lights illuminated as a default.
- temperature control systems, such as heated and ventilated seats, consume power to operate. By offering timed settings, or operation according to detected vehicle occupancy, this help reduce power consumption by these features.
- other auxiliary features such as illuminated instrument clusters with adjustable brightness, and automatic power windows, contribute to overall power consumption, and may be operated in a reduced power mode according to the context.

By implementing contextually relevant controls (such as partial operation options or switching the functionality off), a more energy efficient vehicle may be provided without sacrificing user experience. This is advantageous for traditional fuelled, hybrid, and for electric vehicles. In particular for electric vehicles, increasing driving range is desirable and facilitated by not using power to operate auxiliary functions which do not contribute significantly to useability of the vehicle. Traditional fuelled vehicles may benefit from improved fuel economy through improved power management.

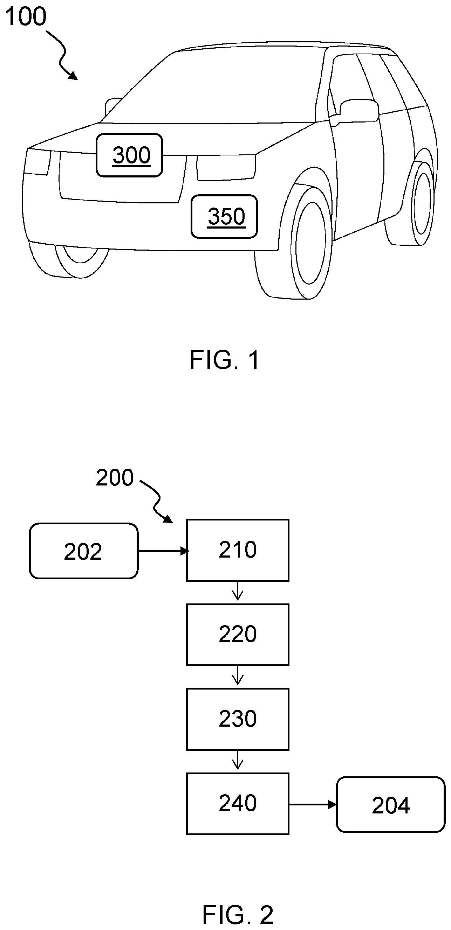

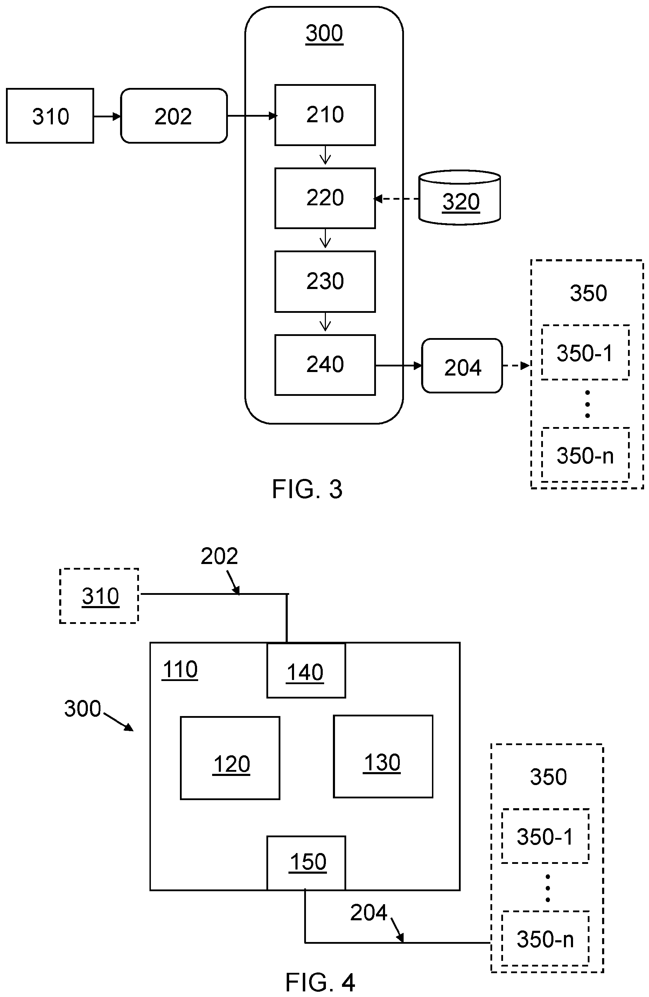

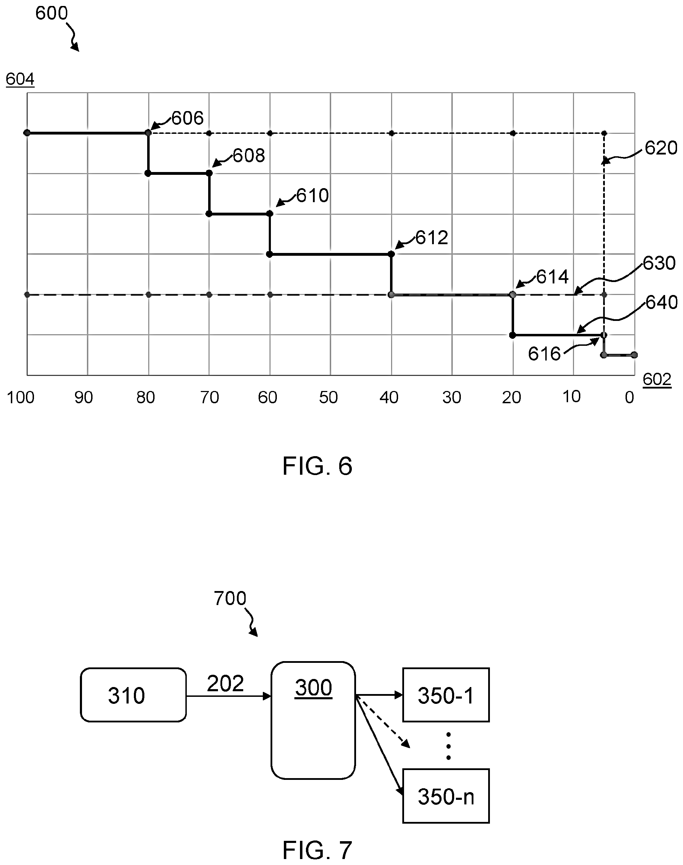

Figure 1 shows a vehicle 100 according to an embodiment of the present invention. The vehicle 100 comprises a control system 300 as illustrated in Figures 3 and 4, as part of a system 700 as in Figure 7 with plural auxiliary electrical systems 350. The auxiliary electrical systems 350 can be controlled by the control system 300 to conserve electrical energy by operating one or more of the auxiliary electrical systems 350 in a power saving mode.

It should be understood that the term "power saving mode" used herein refers to a way of operating an auxiliary electrical system to draw less power than operating in a default, or standard, mode of operation, dependent on a current context of the vehicle. It refers to a separate "power saving" phenomenon to that which may be achieved by a vehicle which is set to operate in a so-called "Eco mode" or "Efficiency mode" whereby the vehicle is operated in a way to reduce fuel consumption and encourage a more economical driving style, for example by adjusting engine and transmission parameters and/or reducing throttle response. The one or more "power saving modes" may alternatively be called "power management modes" because operating auxiliary electrical system(s) in such a mode may improve power management by avoiding or reducing powering systems which is unnecessary due to the current context of the vehicle.

The plurality of auxiliary electrical systems 350 may not be directly powered by a traction battery of the vehicle 100. For example, the plurality of auxiliary electrical systems 350 may be configured to operate at a low voltage, e.g. at 12V, by an auxiliary electrical power supply. The plurality of auxiliary electrical systems 350 may comprise, for example, an infotainment input / output device, an interior light, an exterior light, a speaker, a heater, an air conditioner, a seat warmer, a seat ventilator. Such various different auxiliary electrical systems 350 may be controlled by the control system 300 to provide a flexible and contextually relevant level of functionality while also conserving electrical power by reducing the functionality (and therefore power drawn) by the auxiliary electrical systems 350 which, according to the current context of the vehicle 100, do not contribute (or contribute negligibly) to the perceived functionality provided by the vehicle.

The plurality of auxiliary electrical systems 350 may comprise a plurality of different auxiliary electrical systems configured to provide functionality at the same location in the cabin (e.g. for a particular occupant of the cabin to use), such as a seat warmer, a seat cooler, a HVAC air vent, lighting (e.g. cabin interior lights), and an infotainment system. The plurality of auxiliary electrical systems may comprise a plurality of the same type of auxiliary electrical system at plural different locations in the cabin, e.g. plural infotainment screens for viewing from different seats in the cabin.

Figure 2 shows a method for controlling a plurality of auxiliary electrical systems of a vehicle in accordance with an embodiment of the invention. The method 200 is a method of controlling a plurality of auxiliary electrical systems 350 of a vehicle 100, such as the vehicle 100 illustrated in Figure 1, wherein the plurality of auxiliary electrical systems are controllable to operate in a plurality of power modes comprising a default power mode and a power saving mode using less power than the default power mode. The method 200 may be performed by the control system 300 illustrated in Figures 3 and 4. In particular, with reference to Figure 4, the memory 130 may comprise computer-readable instructions which, when executed by the processor(s) 120, cause the processor(s) to perform the method 200 according to an embodiment of the invention.

The method 200 comprises receiving 210 a use context signal 202 indicative of a current context of the vehicle 100. The method 200 comprises determining 220 a predicted level of use of the plurality of auxiliary electrical systems 350 of the vehicle 100 according to the current context of the vehicle 100. The method 200 comprises, in dependence on the predicted level of use, determining 230 at least one of the plurality of auxiliary electrical systems 350 to operate in the power saving mode. The method 200 comprises outputting 240 a power saving control signal 204 to the at least one of the plurality of auxiliary electrical systems 350 to cause the at least one auxiliary electrical system 350 to operate in the power saving mode. These various steps are described below in more detail with reference to Figure 3.

Figures 3 and 4 show a control system 300 for controlling a plurality of auxiliary electrical systems 350-1 to 350-n (also collectively referred to by numeral 350) of a vehicle 100 in accordance with an embodiment of the invention. The control system 300 comprises one or more controller 110 as shown in Figure 4.

The control system 300 is for controlling a plurality of auxiliary electrical systems 350 of a vehicle. The control system 300 comprises one or more processors 120 collectively configured to: receive 210 a use context signal 202 indicative of a current context of the vehicle 100; determine 230 at least one auxiliary electrical system of the plurality of auxiliary electrical systems 350 to operate in a power saving mode in dependence on the current context of the vehicle 100; and output 240 a power saving control signal 204 to the at least one auxiliary electrical system 350 to cause the at least one auxiliary electrical system 350 to operate in the power saving mode. By accounting for the context of use of the vehicle, power use may be reduced by operating one or more auxiliary electrical systems in a power saving mode. By operating the auxiliary electrical systems 350 depending on the context of the use of the vehicle 100, intelligent control can be performed whereby the user does not perceive a noticeable drop in functionality offered by the auxiliary electrical systems 350. For example, in the context of the vehicle being driven by a driver with no passengers, switching rear seating auxiliary electrical systems off reduces power consumption of the auxiliary electrical systems of the vehicle overall in a way which the driver, as the sole occupant in the front driver's seat, does not consider to impact the functionality of interest to them provided by the auxiliary electrical systems 350. It will be appreciated that the context of the vehicle 100 may comprise various different context factors which are discussed in more detail herein.

The control system 300 illustrated in Figure 3 is configured to receive 210 the use context signal 202 indicative of a current context of the vehicle 100; determine 220 a predicted level of use of the plurality of auxiliary electrical systems 350 of the vehicle 100 according to the current context of the vehicle; in dependence on the predicted level of use, determine 230 the least one of the plurality of auxiliary electrical systems 350 to operate in the power saving mode; and output 240 the power saving control signal 204 to the at least one of the plurality of auxiliary electrical systems 350 to cause the at least one auxiliary electrical system to operate in the power saving mode. For example, if the context of the vehicle 100 is that it is to be driven during the day, internal and external lighting (as auxiliary electrical systems 350) of the vehicle 100 may be operated in a power saving mode because the vehicle 100 is being used in daylight. As such, users of the vehicle 100 may perceive that full or sufficient functionality is being provided by the auxiliary electrical systems 350, though at least one the auxiliary electrical systems 350 (i.e. the lighting) is operated in power saving mode, in a contextually intelligent way. The predicted level of use of the lighting, in the context of a daylight environment, may be categorised as "low use" and so the lighting may be operated in a reduced power mode (e.g. the lights do not automatically switch on following a trigger input, such as opening a door or turning off the engine, as they would otherwise do when operating in a default operating mode).

As shown in Figure 4 alongside Figure 3, the control system 300 comprises one or more controllers 110 collectively comprising at least one electronic processor 120 having an electrical input for receiving an input signal 202; and at least one memory device 130 electrically coupled to the at least one electronic processor 120 and having instructions stored therein; and wherein the at least one electronic processor 120 is configured to access the at least one memory device 130 and execute the instructions thereon so as to: receive 210 a use context signal 202 indicative of a current context of the vehicle; determine 220 a predicted level of use of the plurality of auxiliary electrical systems 350 of the vehicle according to the current context of the vehicle; in dependence on the predicted level of use, determine 230 at least one of the plurality of auxiliary electrical systems 350 to operate in the power saving mode; and output 240 a power saving control signal 204 to the at least one of the plurality of auxiliary electrical systems 350 to cause the at least one auxiliary electrical system to operate in the power saving mode.

The control system 300 is configured to receive a use context signal 202 from input means 310 configured to indicate the context of the vehicle. The input means 310 may comprise, for example, a user interface whereby a user can provide input indicative of the context (such as a user ID, or a route plan where the input means 310 is a navigation system). The input means 310 may comprise, for example, an environment sensor such as an ambient light sensor, precipitation sensor, temperature sensor, or humidity sensor. The input means 310 may comprise an occupancy input, for example from a fastened seat belt, seat pressure sensor, or image capture means capturing an image of a current occupant. Based on the use context signal 202 the control system 300 is configured to determine a predicted level of use of the plurality of auxiliary electrical systems 350 and/or at least one of the plurality of auxiliary electrical systems 350 to operate in the power saving mode. The control system 300 may then output a power saving control signal 204 to control the one or more auxiliary electrical systems and cause then to operate in the power saving mode.

The control system 300 as illustrated in Figure 1 comprises one controller 110, although it will be appreciated that this is merely illustrative and one or more controllers may be envisaged. The controller 110 comprises processing means 120 and memory means 1130. The processing means 120 may be one or more electronic processing device 120 which operably executes computer-readable instructions. The memory means 130 may be one or more memory device 130. The memory means 130 is electrically coupled to the processing means 120. The memory means 130 is configured to store instructions, and the processing means 120 is configured to access the memory means 130 and execute the instructions stored thereon.

The controller 110 comprises an input means 140 and an output means 150. The input means 140 may comprise an electrical input 140 of the controller 110. The output means 150 may comprise an electrical output 340 of the controller 305. The input 140 is arranged to receive a use context signal 202 from an input means as noted above The use context signal 202 is an electrical signal which is indicative of a current context of the vehicle. The output 150 is arranged to output a power saving control signal 204 indicative of one or more auxiliary electrical systems 350 to be operated in the power saving mode for controlling the auxiliary electrical systems 350, and cause them to operate in the power saving mode(s).

In some examples, the control system 300 may be configured to, in dependence on the predicted level of use, determine a further auxiliary electrical system of the plurality of auxiliary electrical systems 350 to operate in the default power mode, and output a default power control signal to the further auxiliary electrical system to cause the further auxiliary electrical system to operate in the default power mode. That is, for example in the context of driving in warm weather with passengers in the rear seats, the rear seat heating may be operated in a power saving mode (since the weather is warm) via transmission of a power saving control signal 204 to the rear seat heaters. However, since there are passengers present in the rear seats, infotainment systems for use by rear seat passengers may be controlled to function in a default power mode and provide full functionality, by way of transmission of a default power control signal to each rear seat infotainment system. Thus, the auxiliary electrical systems 350 in the vehicle may be operated each in a default power more or a power saving mode, dependent on the context of the vehicle 100.

When operating in a power saving mode, the at least one auxiliary electrical system 350-1 to 350-n may be turned off. Advantageously, the auxiliary electrical system 350-1 to 350-n determined to be operated in a power saving mode may be turned off so that it draws substantially zero power. For example, the auxiliary electrical system may be switched off, or may be operated in a snooze mode in which no functionality is provided, unless an input is made to cause the system to be turned on.

When operating in a power saving mode, the at least one auxiliary electrical system 350-1 to 350-n may be turned on and configured to provide a reduced range of functionality compared to operation in a default power mode. For example, an infotainment system may provide audio output only and no visual output, or a seat warmer may provide warming in part of the seat and not another part. When operating in a power saving mode, the at least one auxiliary electrical system 350-1 to 350-n may be turned on and configured to provide a default level of functionality at a reduced output power compared to operation in a default power mode. For example, adjusting the frequency balance in audio output, and/or brightness of a visual display, may be capped at a limit less than the maximum possible output frequency range/brightness.

In some examples, the at least one auxiliary electrical system 350 operating in the power saving mode may use less than 50% of the power used by the at least one auxiliary electrical system 350 operating in the default power mode. For example, operating an infotainment system in a default mode may use three times as much electrical energy as operating in a power saving mode. In some examples, the at least one auxiliary electrical system 350 operating in the power saving mode may, as part of the plurality of auxiliary electrical systems 350, cause the plurality of auxiliary electrical systems 350 to use less than 50% of the power used by the plurality of auxiliary electrical system all operating in the default power mode. For example, there may be a group of ten auxiliary electrical systems 350, and operating two of those ten systems in a corresponding power saving mode with the remaining eight system operating in a default power mode, may cause the group of ten systems to draw less than half the power compared with the same ten system all operating in a corresponding default power mode. In some examples, the power usage of the plurality of auxiliary electrical systems 350 with plural auxiliary electrical systems 350 running in the power saving mode may be below 50% of the plurality of the auxiliary electrical systems 350 running in the default power mode. That is, a subgroup of auxiliary electrical systems 350 comprised in an HVAC system of the vehicle may, when all operating in a corresponding power saving mode, draw less than half the power than if all the auxiliary electrical systems 350 of the subgroup were operating in a default power mode. Of course, in other examples, the power saving may be more, or less, than a 50% value. Advantageously, the power used by one or more of the auxiliary electrical system(s) operating the power saving mode may be at most half (or some other fraction less than 1 of) the power used by the auxiliary electrical system(s) when operating in the default power mode.

Broadly, the current context may be indicative of the environment and usage of the vehicle. The context of the vehicle may be determined in different ways, to identify a predicted level of use of the auxiliary electrical systems 350 in that context, so that the power requirements of the auxiliary electrical systems 350 can be reduced by intelligently operating those systems 350 in a context-appropriate way.

For example, the current context of the vehicle may comprise a planned journey of the vehicle 100. The planned journey may be a journey entered via a user interface 310, for example into a route planning apparatus (e.g. a satellite navigation system of the vehicle). The use context signal 202 which is provided to the control system 300 in such an example may be considered to comprise an input indicative of the vehicle to be driven along a planned route generated by a route planning apparatus. A user may enter a route to a route planning system of the vehicle, and the route may be used as input providing a use context signal 202 for the control system 300 for use in determining one or more auxiliary electrical systems 350 to operate in a power saving mode, to conserve energy stored in the vehicle 100. By planning a journey, factors of an upcoming journey can be accounted for, such as distance to be travelled, terrain to be travelled over, elevation change, gradient of the roads to be travelled on, and other factors, in particular, which can affect energy consumption of the vehicle.

In examples where the current context is indicative of a planned journey of the vehicle 100, the determination 220 of the predicted level of use may be performed according to the planned journey, to determine the at least one of the plurality of auxiliary electrical systems 350 to be operated in the power saving mode in order that the plurality of auxiliary electrical systems 350 do not use energy exceeding a predetermined energy threshold of the planned journey.

For example, the context may be of a short planned journey to a user's home or other location having an electric vehicle supply equipment available to recharge the energy store of the vehicle and at which the user is likely to park the vehicle for a time during which it may be recharged. In this example, it may be predicted that the user is not interested in conserving energy stored in the vehicle 100 (for example to increase the range of the vehicle), because the vehicle is only travelling a short distance and can be connected for energy store charging at the destination. As such, one or few auxiliary electrical systems 350 determined to be of lowest interest to the user may be operated in a power saving mode with other auxiliary electrical systems 350 operating in a default power mode to provide a full or near-full range of functionality without retaining available energy for propulsion of the vehicle where possible.

As another example, in the context of a long planned journey (e.g. over an hour, over 100 km, expected to use over 75% of a fully charged energy store of the vehicle, or over some other threshold measure of journey length), and/or in the context of a journey on which the user indicates they do not want to stop to recharge the vehicle energy store if possible (e.g. to save overall journey time or avoid using a public charging station), it may be determined that the user is likely to want to drive without stopping *en route* for recharging an energy store of the vehicle. Thus, it may be predicted that the user is likely to want to conserve energy as far as possible to extend the driving range of the vehicle, and so at least some of the plurality of auxiliary electrical systems 350 may be operated in a power saving mode to prevent energy being used to power those systems 350 and instead be used to people the vehicle on its planned journey, advantageously without affecting the powertrain performance.

Advantageously, in the context of a planned journey, the predicted power requirements of the plurality of auxiliary electrical systems 350 can be determined according to the planned journey and one or more of the auxiliary electrical systems 350 can be operated in the power saving mode.

In some examples, a more granular approach to controlling the auxiliary electrical systems to operate in a power saving mode may be made. For example, the determination 220 of the predicted level of use may be performed according to the planned journey, to: determine at least one of the plurality of auxiliary electrical systems 350 to be operated in a first power saving mode according to predicted energy usage to perform the planned journey being above a first energy usage threshold, and determine at least one of the plurality of auxiliary electrical systems 350 to be operated in a second power saving mode, in which less power is consumed than in the first power saving mode, according to predicted energy usage to perform the planned journey being above a second energy usage threshold greater than the first energy usage threshold. For example, if the planned journey is for a distance up to 10km, no auxiliary electrical systems are operated in a power saving mode. For a planned journey distance between 10km and 50km, one or more of the auxiliary electrical systems are operated in a first power saving mode (for example, a first number of systems operate in a power saving mode, and/or the systems operate in a first power saving mode to provide a first reduced level of functionality compared with operation in a default operation mode). For a planned journey distance over 50km, one or more of the auxiliary electrical systems are operated in a second power saving mode providing greater power saving than operation in the first power saving mode (for example, a second, greater, number of systems operate in a power saving mode, and/or the systems operate in a second power saving mode to provide a second, further, reduced level of functionality compared with operation in a default operation mode). It will be appreciated different levels of power saving may be implemented according to one or more criteria of the planned journey.

Such a granular approach may be taken according to predicted energy usage estimated for a planned journey as discussed above, and/or may also be taken according to one or more other contextual factors. For example, a set of auxiliary electrical systems 350 may be operated in a first power saving mode according to the location of occupants in the vehicle, and may be operated in a second power saving mode, or not, further according to the identity of the driver. It will be appreciated there are many combinations of factors which may be accounted in the context of the vehicle and which may be used as input to determine how to operate the auxiliary electrical systems in a contextually relevant way to save power without sacrificing relevant functionality.

As another example of context, the current context of the vehicle may comprise a current time of use of the vehicle 100. By "time of use" this is intended to mean some point in a calendar period, which may be a time of day (e.g. 7am), a day of the week (e.g. Monday, a weekend day), a month of the year (e.g. January), etc. The context comprising a time of use of the vehicle may also be understood in some examples to mean some predicted length of time of use of the vehicle, such as an approximate duration or a duration within or above/below a predetermined upper/lower duration limit (e.g. approximately a 10 minute journey, approximately a 1 hour journey, a journey between 5 minutes and 15 minutes, a journey over 2 hours, a journey under 15 minutes, etc. In such examples, the use context signal 202 may comprise an input provided by a user, the input indicative of a vehicle to be driven at an indicated time, e.g. a unlock signal, an engine start-up signal, or a scheduled journey signal. The indication that the vehicle is about be driven may thus be provided in different ways.

The determination 220 of the predicted level of use in such examples may comprise identifying, using a usage log stored in a storage means 320, that the vehicle 100 was historically used at a historical time corresponding to the current time of use of the vehicle, and identifying, using the usage log, at least one of the plurality of auxiliary electrical systems historically operated in a power saving mode at the corresponding historical time of use of the vehicle. The usage log may, in some examples, store the context, alongside an indication of one or more auxiliary electrical systems to operate in a power saving mode, and operating parameters to be used to operate the auxiliary electrical systems (e.g. electrical current, duration of operation). The control system 300 can therefore use past operating parameters to similarly control systems of the vehicle for journeys corresponding to use at a same time and/or day. The storage means 320 may comprise, for example, a memory local to the vehicle (such as a memory 130 of the control system 300 or an external memory connected to the control system 300), or a memory (e.g. on a remote server or cloud) remote from the control system and vehicle with which the control system may communicate via a wireless communication channel.

That is, the power saving control signal 204 output to the at least one auxiliary electrical system 350 to cause the at least one auxiliary electrical system 350 to operate in the power saving mode may be determined according to operation parameters retrieved from the usage log. The operation parameters are indicative of the historical operation of the at least one of the plurality of auxiliary electrical systems 350 operating in the power saving mode at the matching historical time of use of the vehicle 100. The control system 300 may thus not only determine that an auxiliary electrical system is to be operated in a power saving mode, but may retrieve the prior determined operation parameters stored in the usage log and provide these to the auxiliary electrical system, for example rather than a determination being made of what the operation parameters should be. By "matching" it will be appreciated that the match between the historical time of use and current time of use may be within a window of matching time, e.g. historical and current times within 15 minutes of each other, (or 30 minutes, or other time window), or historical and current dates within a particular date window (e.g. within a week of each other, or within the same month).

For example, if the usage log includes records to show the vehicle has previously been driven around 7am on Monday morning and during those journeys, a user of the vehicle chose to disable the infotainment systems in the rear of the vehicle, then that information may be used to automatically disable the infotainment systems in the rear of the vehicle in a subsequent journey at around 7am on a Monday. In this example, a reduction in power usage is achieved by disabling systems.

The control system 300 may be configured in some examples to retrieve, from the storage means 320, a historical use status of the plurality of auxiliary electrical systems over a prior predetermined time period (e.g. a prior week, month, three-month period, year, etc), and a corresponding historical location of one or more occupants in the cabin over the prior predetermined time period (e.g. a driver and passenger in the front passenger seat; a driver and no passengers; a driver and two occupants in the rear seats on the left and right sides). The control system 300 may then determine the predicted level of use in dependence on the current determined location of the one or more occupants in the cabin matching the historical location of one or more occupants in the cabin over the prior predetermined time period, and on the corresponding historical use status of the plurality of auxiliary electrical systems. Thus the auxiliary electrical systems 350 may be operated similarly to previous operation for the same occupancy.

In other examples, the control system 300 may both consider a predicted level of use of auxiliary electrical systems 350 based on a first context factor which acts to reduce the power usage of the systems compared with operation of the systems in a default operating mode, and a predicted level of use of the auxiliary electrical systems 350 based on a second context factor which acts to increase the power usage of the systems compared with operation of the systems accordingly only to the first context factor, but still reduce the power usage of the systems compared with operation of the systems in a default operating mode. For example, a first context factor may be that the vehicle is in daylight and the control system 300 may determine to prevent illumination of internal and external lighting of the vehicle upon a vehicle door being opened (which is a default operation of the lighting). However, a second context factor may be the identity of the user unlocking the vehicle door (e.g. as identified via a personal key fob or device used to unlock the vehicle doors) which, from historical use of the vehicle in daylight by that user (e.g. as retrieved from the usage log stored in the storage means 320) that the particular user wants the interior lighting to illuminate even in daylight. Thus, the first context factor would cause a first power saving by not illuminating any lights, and the second context factor causes a second, smaller, power saving of illuminating the interior lights for the identified user, while both accounting for only the first context factor or both the first and second context factors, less power is used to operate the lighting than if it operated in the default mode.

In this way, by accounting for historical usage of the auxiliary electrical systems when in a matching current context, the historical power-saving use of the plurality of auxiliary electrical systems may be taken into account. In a sense the control system 300 may thus operate using machine learning to control the auxiliary electrical systems, by way of the control system 300 using training data in the form of historical data stored in a usage log to similarly control the auxiliary electrical systems in a current context matching a historical context.

As another example of current context also mentioned above, the current context of the vehicle 100 may comprise a determined identity of the current user of the vehicle, such as a driver. In such examples, the determination of the predicted level of use may comprise identifying, using a usage log stored in a storage means 320, that the vehicle 100 was historically used by the current user of the vehicle, and identifying, using the usage log, at least one of the plurality of auxiliary electrical systems historically operated in a power saving mode by the current user. Thus the user's preferences may be accounted for alongside determined likely desired functionality. The desired functionality may be determined according to one or more other contextual factors. Thus, the user can be provided with expected or preferred functionality, while saving power where possible by operating one or more auxiliary electrical systems in a power saving mode. In such examples, the use context signal 202 may comprise an input indicative of the identity of the user, such as an unlock signal from a personal device associated with the user, entry of a personal credential indicative of the user identity, or biometric detection and recognition of a user of the vehicle (e.g. via a facial scan, fingerprint, passcode entry, etc).

As another example of context also mentioned above, the current context of the vehicle may comprise a determined occupancy of the vehicle. By determining where occupants are located within the vehicle cabin, auxiliary electrical functions servicing locations where the occupants are located may be operated in the default operating modes and where there are no occupants detected, auxiliary electrical functions servicing those locations may be operated in the power saving mode. Thus in examples where the current context is indicative of a determined occupancy of the vehicle; the determination of the predicted level of use may comprise identifying that the at least one auxiliary electrical system is configured to provide functionality at a location in the vehicle at the location of the one or more occupants, and/or identifying that the at least one further auxiliary electrical system is configured to not provide functionality at a location in the cabin other than at the location of the one or more occupants. The determination of which of the auxiliary electrical systems to operate in a power saving mode may thus be made in dependence on the occupancy of the vehicle. For example, if it is determined that there are no occupants in the rear passenger seats, then infotainment systems, or audio output devices, configured to provide output to those rear passenger seats may be operated in a power saving mode.

The use context signal 202 in such examples may comprise an input indicative of one or more occupants located in the cabin of the vehicle. The occupancy signal may be generated in dependence on one or more of: a seatbelt connection signal indicative of a seatbelt 310 being fastened in a location in the cabin; a pressure sensor signal indicative of an occupant weight applied to a pressure sensor 310 at a seat location in the cabin; and an image capture signal indicative of image capture by an image capture device 310 of an occupant at a location in the cabin. It will be appreciated there are different possible ways which may be used, alone or in combination, to determine the presence of an occupant. In some example, the type of occupant may be taken into account when controlling the auxiliary electrical systems to operate in a power saving mode or a default power mode. For example, if an occupant is detected and is determined to be an adult, a seat heater as an auxiliary electrical system may be controlled to operate in a default power mode, whereas if the occupant is determined to be a child or animal, the seat heater as an auxiliary electrical system may be controlled to operate in a power saving mode. As another example, if the occupant is determined to be a child an infotainment system in the location of the child occupant may be operated in a default power mode whereas if the occupant is determined to be a pet, the infotainment system may be operated in a power saving mode.

As another example of context also mentioned above, the current context of the vehicle may be indicative of an environmental factor of the environment in which the vehicle is located. The environmental factor may comprise one or more of light levels, precipitation levels, and ambient temperature for example. The determination of the predicted level of use 220 may comprise determining to operate one or more lights of the vehicle in a power saving mode, the one or more lights being one or more auxiliary electrical systems of the plurality of auxiliary electrical systems, in dependence on the environment being illuminated. The determination of the predicted level of use 220 may comprise determining to operate one or more window wipers of the vehicle in a power saving mode, the one or more window wipers being one or more auxiliary electrical systems of the plurality of auxiliary electrical systems, in dependence on the presence of precipitation in the environment of the vehicle. The determination of the predicted level of use 220 may comprise determining to operate the HVAC system or systems of the vehicle in a power saving mode, the HVAC system(s) being one or more auxiliary electrical systems of the plurality of auxiliary electrical systems, in dependence on the ambient temperature. Advantageously, lighting, water removal, and/or temperature systems may be controlled to operate in a power saving mode according to the detected environment, such as where the provision of lighting is unlikely to be especially beneficial because the vehicle is in daylight.

In any or all of the examples discussed above, the control system 300 may be configured to: in dependence on the predicted level of use 220, determine a subgroup of a plurality of auxiliary electrical systems of the plurality of auxiliary electrical systems 350 to operate in the power saving mode; and output a power saving control signal 204 to the plurality of auxiliary electrical system to cause the at subgroup of auxiliary electrical systems to operate in the power saving mode. Thus, a subgroup of auxiliary electrical systems 350 may be identified and operated in a power saving mode. This may be a more computationally efficient way of controlling each of the plurality of auxiliary electrical systems than addressing each individually.

It is desirable for the vehicle user to be informed of the operation of the auxiliary electrical systems 350 in a default or power saving mode, so there is no confusion as to why the auxiliary electrical systems 350 are not all operating in their default operating modes (for example, if a light does not illuminate to save power, this may be misunderstood by the user that the light is faulty or broken, whereas the light is operational but a determination has been made that is need not operate in the current context). Therefore, the control system 300 may be further configured to output an indicator signal to an output device and cause the output device to provide an indication, to an occupant of the vehicle, of the operation of the at least one auxiliary electrical system in the power saving mode. In this way, the user is informed of the operation of the auxiliary electrical systems in a power saving mode to help avoid concern or confusion as to why those systems are not operating in the default power mode, and to increase user confidence in the operation of the auxiliary electrical systems in a contextually relevant way.

As noted in examples above, the control system 300 may be further configured to receive a user override input signal to cause the at least one auxiliary electrical system operating in the power saving mode to operate in the default power mode. Advantageously, a user can take manual control of the operation of the auxiliary electrical systems and choose to override operation of one or more of them in a power saving mode if they wish.

The user may wish to understand a benefit of saving power by operation of the auxiliary electrical systems 350 in a power saving mode and one such benefit is increased driving range of an EV vehicle, since power not used to power auxiliary electrical systems 350 may be user to propel the movement of the vehicle along a route. In some examples, therefore, the control system 300 may be further configured to: determine an estimated difference in driving range for the vehicle 100 between operating the at least one auxiliary electrical system 350 in the default power mode, and operating the at least one auxiliary electrical system 350 in the power saving mode, and output an range difference indicator signal to an output device (e.g. a display screen or the vehicle or of a personal electronic device of the user) and cause the output device to output an indication of the difference in driving range to an occupant of the vehicle due to the at least one auxiliary electrical system operating in the default power mode compared with operating in the power saving mode. Advantageously, the power which is saved by operating the auxiliary electrical systems in the power saving mode as opposed to the default power mode may contribute towards the driving range of the vehicle 100, and this contribution may be indicated to the user.

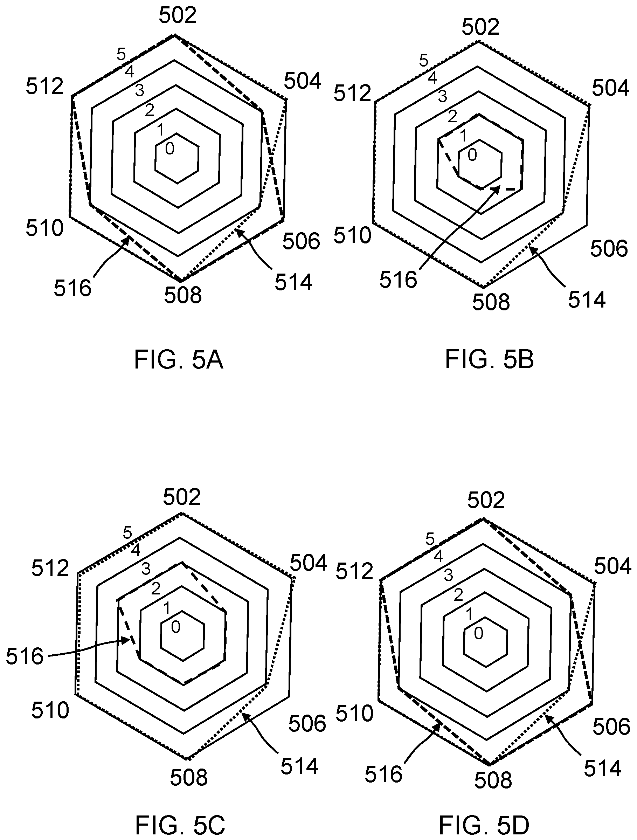

Figures 5A to 5D illustrate radar charts for different examples of operating auxiliary electrical systems 350 of the vehicle in power saving modes in various ways according to the context of vehicle occupancy. It will be appreciated similar such charts may be determined for other contexts as well. Each radar chart includes six points representative of different auxiliary electrical systems 350: climate comfort/HVAC systems 502, in cabin air quality/air filtration systems 504, infotainment systems 506, audio output 508, active Noise, Vibration and Harshness (NVH) systems 510, and internal lighting systems 512 (of course other systems may be included in other examples and not all these systems may be included in other examples). Figures 5A to 5D illustrate that the predicted level of use of the plurality of auxiliary electrical systems 350 of the vehicle may be one of a plurality of predetermined predicted levels of use (e.g. a level from 0 to 5).

Each system 502-512 is indicated as having a possible mode of operation having an associated power usage from zero (i.e. switched off and drawing no power) through increasing power usage of modes one, two, three, four, to five which is a default power usage mode of the system. On each chart, the power demand 516 of the systems is indicated in a dashed line, and the perceived operation 514 by occupants of the vehicle is indicated in a dotted line.

Figure 5A shows that, without operating any of the systems in a power saving mode, the climate comfort/HVAC system 502 has a high power demand of 5, in cabin air quality/air filtration system 504 has a high power demand of 4, the infotainment system 506 has a high power demand of 5, the audio output system 508 has a high power demand of 5, the active NVH system 510 has a high power demand of 4, and the internal lighting system 512 has a high power demand of 4. The perceived operation 514 is determined to be high for all systems (at level 5 for all systems except for the infotainment system 506 with a perceived operation 514 level of 4).

Figure 5B shows that, by operating the systems in a power saving mode according to the context of having one driver occupant and no other occupants, the climate comfort/HVAC system 502 has a low power demand of 2, in cabin air quality/air filtration system 504 has a low power demand of 2, the infotainment system 506 has a low power demand of 2, the audio output system 508 has a low power demand of 1, the active NVH system 510 has a low power demand of 1, and the internal lighting system 512 has a low power demand of 2. However, the perceived operation 514 is still determined to be high for all systems (at level 5 for all systems except for the infotainment system 506 with a perceived operation 514 level of 4).

Figure 5C shows that, by operating the systems in a power saving mode according to the context of having one driver occupant, one front seat passenger occupant, and no other occupants behind the front row, the climate comfort/HVAC system 502 has a medium power demand of 3, in cabin air quality/air filtration system 504 has a low power demand of 2, the infotainment system 506 has a low power demand of 2, the audio output system 508 has a low power demand of 2, the active NVH system 510 has a low power demand of 2, and the internal lighting system 512 has a medium power demand of 3. However, again, the perceived operation 514 is still determined to be high for all systems (at level 5 for all systems except for the infotainment system 506 with a perceived operation 514 level of 4).

Figure 5D shows that, by operating the systems in a power saving mode according to the context of having full vehicle occupancy of a driver, a front seat passenger occupant, and three second seating row occupants, the climate comfort/HVAC system 502 has a high power demand of 5, in cabin air quality/air filtration system 504 has a high power demand of 4, the infotainment system 506 has a high power demand of 5, the audio output system 508 has a high power demand of 5, the active NVH system 510 has a high power demand of 4, and the internal lighting system 512 has a high power demand of 4. The perceived operation 514 is determined to also be high for all systems (at level 5 for all systems except for the infotainment system 506 with a perceived operation 514 level of 4), as expected because the vehicle is occupied in all seating positions.

It can be seen that the functionality of these auxiliary electrical systems 502-514 can be reduced to draw a lower power than when operating in a default power mode dependent on the context of the occupancy, and the perceived functionality of the systems does not change.

Figure 6 shows an example relationship between power consumed 604 by auxiliary electrical systems 350 of the vehicle, on the vertical axis, and a remaining state of charge 602 of an energy source of the vehicle, on the horizontal axis, in accordance with embodiments of the invention. This illustrates that the operation of the auxiliary electrical systems 350 may be controlled to be in a default operation mode or a power saving mode according to the context of the remaining state of charge of the energy store of the vehicle. Thus, as another example of current context, the current context of the vehicle 100 may comprise a remaining state of charge of an energy source of the vehicle.

The dotted line 620 indicates the energy usage of the auxiliary electrical systems 350 when the vehicle 100 is operating in a "comfort" (i.e. a full functionality) mode whereby there is no power saving mode entered by the auxiliary electrical systems 350. Regardless of the remaining state of charge 602, the functionality, and therefore energy use, of the auxiliary electrical systems 350 remaining constant and high. The dashed line 630 indicates the energy usage of the auxiliary electrical systems 350 when the vehicle 100 is operating in an "eco-mode" (i.e. a low functionality energy saving) mode whereby the auxiliary electrical systems 350 all operate in a constant power saving mode regardless of the remaining state of charge 602 of the energy store (i.e. regardless of the context of the vehicle). The functionality, and therefore energy use, of the auxiliary electrical systems 350 remains constant and low.

According to examples disclosed herein, intelligent contextually relevant power saving may be performed for the auxiliary electrical systems 350 dependent on the context of the vehicle energy store's state of charge 602. As the energy stored in the energy store decreases (e.g. by driving the vehicle 100) the control system 300 gradually controls the operation of auxiliary electrical systems 350 to change the energy drawn overall by the auxiliary electrical systems 350 so that less energy is drawn as the state of charge decreases. In this example, on reaching 80% of full state of charge, the control system 300 controls the internal lighting system 606 to operate in a power saving mode so the power consumed 604 by all the auxiliary electrical systems 350 falls. On reaching 70% of full state of charge, the control system 300 controls the infotainment systems 608 to operate in a power saving mode so the power consumed 604 by all the auxiliary electrical systems 350 falls again. On reaching 60% of full state of charge, the control system 300 controls the in-cabin air quality systems 610 to operate in a power saving mode so the power consumed 604 by all the auxiliary electrical systems 350 falls again. On reaching 40% of full state of charge, the control system 300 controls the climate comfort/HVAC system 612 to operate in a power saving mode so the power consumed 604 by all the auxiliary electrical systems 350 falls again. On reaching 20% of full state of charge, the control system 300 controls a further auxiliary electrical system 616 to operate in a power saving mode so the power consumed 604 by all the auxiliary electrical systems 350 falls again. At a state of charge of 5%, all auxiliary electrical systems 350 are operated in a power saving mode.

Of course it will be appreciated that the order and state of charge of switching auxiliary electrical systems 350 to a power saving mode can vary. Such an example may be implemented in combination with one or more other examples disclosed herein (for example, if the occupancy is used as a context on which to base control of the power mode of the auxiliary electrical systems 350, this may cause the state of charge values at which an auxiliary electrical system 350 is switched to a power saving mode to shift and/or the order of which auxiliary electrical systems 350 are switched to operating in a power saving mode to be changed.

Figure 7 shows a system 700 comprising a control system 300 and a plurality of auxiliary electrical systems 350-1 to 350-n. Also illustrated is an input device 310 by which the context may be provided, by way of a user context signal 202, to the control system 300, such as a sensor, user input device, user identification device, or other input system configured to indicate a current context factor for the vehicle.

This disclosure sets out various examples which aim to provide a comparable level of user experience of a vehicle while reducing unnecessary power usage. By intelligently determining which features may be operated at reduced power usage, according to the particular context of usage of the vehicle, power savings may be made by reducing the power used for features which have been identified as not necessary for vehicle operation and user experience.

It will be appreciated that various changes and modifications can be made to the present invention without departing from the scope of the present application.

## Claims

1. A control system for controlling a plurality of auxiliary electrical systems of a vehicle, wherein the plurality of auxiliary electrical systems are controllable to operate in a plurality of power modes comprising a default power mode and a power saving mode using less power than the default power mode, the control system comprising one or more processors collectively configured to:
receive a use context signal indicative of a current context of the vehicle;
determine a predicted level of use of the plurality of auxiliary electrical systems of the vehicle according to the current context of the vehicle;
in dependence on the predicted level of use, determine at least one of the plurality of auxiliary electrical systems to operate in the power saving mode; and
output a power saving control signal to the at least one of the plurality of auxiliary electrical systems to cause the at least one auxiliary electrical system to operate in the power saving mode.

2. The control system of claim 1, wherein the at least one auxiliary electrical system operating in the power saving mode uses less than 50% of the power used by the at least one auxiliary electrical system operating in the default power mode.

3. The control system of any preceding claim, wherein the current context is indicative of one or more of:
a planned journey of the vehicle;
a time of use of the vehicle;
a determined identity of the current user of the vehicle; and
a determined occupancy of the vehicle.

4. The control system of any preceding claim, wherein:
the current context is indicative of a planned journey of the vehicle; and
the determination of the predicted level of use is performed according to the planned journey, to
determine the at least one of the plurality of auxiliary electrical systems to be operated in the power saving mode in order that the plurality of auxiliary electrical systems do not use energy exceeding a predetermined energy threshold of the planned journey.

5. The control system of any preceding claim, wherein:
the current context is indicative of a current time of use of the vehicle; and
the determination of the predicted level of use comprises:
identifying, using a usage log stored in a storage means, that the vehicle was historically used at a historical time corresponding to the current time of use of the vehicle; and
identifying, using the usage log, at least one of the plurality of auxiliary electrical systems historically operated in a power saving mode at the corresponding historical time of use of the vehicle.

6. The control system of any preceding claim, wherein:
the current context is indicative of a determined identity of a current user of the vehicle; and
the determination of the predicted level of use comprises:
identifying, using a usage log stored in a storage means, that the vehicle was historically used by the current user of the vehicle; and
identifying, using the usage log, at least one of the plurality of auxiliary electrical systems historically operated in a power saving mode by the current user.

7. The control system of any preceding claim, wherein:
the current context is indicative of a determined occupancy of the vehicle; and
the determination of the predicted level of use comprises identifying that the at least one auxiliary electrical system is configured to provide functionality at a location in the cabin at the location of the one or more occupants.

8. The control system of any preceding claim, configured to:
retrieve, from a storage means, a historical use status of the plurality of auxiliary electrical systems over a prior predetermined time period, and a corresponding historical location of one or more occupants in the cabin over the prior predetermined time period; and
determine the predicted level of use in dependence on the determined location of the one or more occupants in the cabin matching the historical location of one or more occupants in the cabin over the prior predetermined time period, and the corresponding historical use status of the plurality of auxiliary electrical systems.

9. The control system of any preceding claim, wherein, when operating in a power saving mode, the at least one auxiliary electrical system is turned off.

10. The control system of any preceding claim, wherein the plurality of auxiliary electrical systems are not directly powered by a traction battery of the vehicle.

11. The control system of any preceding claim, wherein the predicted level of use of the plurality of auxiliary electrical systems of the vehicle is one of a plurality of predetermined predicted levels of use.

12. The control system of any preceding claim, wherein the control system is further configured to output an indicator signal to an output device and cause the output device to provide an indication, to an occupant of the vehicle, of the operation of the at least one auxiliary electrical system in the power saving mode.

13. A system comprising:
the control system of any preceding claim; and
the plurality of auxiliary electrical systems.

14. A vehicle comprising the system of claim 13 or the control system of claims 1 to 12.

15. A method for controlling a plurality of auxiliary electrical systems of a vehicle, wherein the plurality of auxiliary electrical systems are controllable to operate in a plurality of power modes comprising a default power mode and a power saving mode using less power than the default power mode, the method comprising:
receiving a use context signal indicative of a current context of the vehicle;
determining an predicted level of use of the plurality of auxiliary electrical systems of the vehicle according to the current context of the vehicle;
in dependence on the predicted level of use, determining at least one of the plurality of auxiliary electrical systems to operate in the power saving mode; and
outputting a power saving control signal to the at least one of the plurality of auxiliary electrical systems to cause the at least one auxiliary electrical system to operate in the power saving mode.
